# EUROPEAN PATENT SPECIFICATION

(11) **EP 0 585 917 B1**
(45) Date of publication and mention of the grant of the patent: **24.06.1998**
(21) Application number: 93114042.0
(22) Date of filing: 02.09.1993
(51) Int. Cl.: H01R 13/625

(54) **A plug for electrical connectors for connection between a towing vehicle and a trailer**
Elektrischer Steckverbinder für die Verbindung zwischen Kraftfahrzeug und Anhänger
Connecteur électrique à fiche pour la connexion entre une voiture et une remorque

(30) Priority: 04.09.1992 IT TO920736
(43) Date of publication of application: 09.03.1994
(73) Proprietor: MENBER'S S.p.A., 37045 Legnago (IT)
(72) Inventor: Pasotto, Giorgio, I-37045 Legnago (Verona) (IT)
(74) Representative: Marchitelli, Mauro

(56) References cited:
- EP-A- 0 358 101
- DE-U- 8 707 999

## Description

The present invention relates in general to electrical connectors for connection between a towing vehicle and a trailer, comprising a plug and a socket with mutual coupling means. In particular, the invention relates to a plug for such electrical connectors, of the type comprising a hollow body which can be coupled with the socket by means of a bayonet engagement, and including an inner sleeve containing a contact assembly with an associated cable-grip, a tubular rear end portion coaxial with an end of the inner sleeve, an outer ring rotatable coaxially on the inner sleeve and having bayonet engagement means, and a plate carried by the body for supporting a closure cover of the socket.

Plugs for electrical connectors of the type specified above are known from European patent applications EP-A-0249181, EP-A-0358101 and EP-A-0372188.

In the case of EP-A-249181, the tubular end portion is constituted by an element which is screwed into the inner sleeve and the contact assembly is clamped axially within the body as a result of being gripped between the tubular end portion and the inner sleeve. The support plate for the socket cover is fixed rigidly to the outer ring and can rotate therewith. This structure is disadvantageous for two reasons: in the first place, if the threaded coupling between the tubular end portion and the inner sleeve is loosened, the restraint of the contact assembly becomes loose and this may cause difficulties as regards its location relative to the contact assembly in the socket when the plug is inserted therein. On the other hand, the fixing of the support plate to the outer ring which, after the plug has been coupled axially with the socket, has to be rotated in order to create a bayonet-like connection between them, may involve problems as regards the exact angular positioning of the plate, making its engagement by the socket cover difficult.

In EP-A-358101, however, the support plate for the socket cover is fixed to the inner sleeve and the tubular end portion is in turn connected to the outer bayonet ring. This arrangement is structurally complex and makes the plug quite bulky.

In the case of EP-A-0372188, which also provides for the contact assembly to be clamped axially between the tubular end portion and the inner sleeve, the support plate for the socket cover is fixed to the tubular end portion. This arrangement also has the disadvantages mentioned above in connection with the correct angular positioning of the plate relative to the socket cover.

The object of the present invention is to overcome the problems mentioned above and to provide a plug for electrical connectors of the type defined at the beginning which, by means of a structurally simple and cheap construction, on the one hand, constantly ensures that the contact assembly is clamped firmly within the body and, on the other hand, permits easier and more precise angular positioning of the support plate for the socket cover relative to the body.

According to the invention, these objects are achieved by virtue of the fact that the inner sleeve and the tubular rear end portion are formed as a single piece, in that the contact assembly is clamped rigidly relative to the inner sleeve by means of the cable-grip, and in that the support plate is independent both of the inner sleeve with the tubular rear end portion, and of the outer sleeve, and can rotate relative to both of these elements.

According to a preferred embodiment of the invention, the contact assembly is fixed to an integral internal projection of the inner sleeve which defines a portion of the cable-grip.

Conveniently, an annular support mounted coaxially on the inner sleeve is fixed to the support plate and has at least one resiliently deformable portion for enabling the plate to pivot between a lowered position and a partially raised position relative to the body, stop means being provided for locking the annular support against rotation relative to the outer ring and relative to the inner sleeve when the plate is in the lowered position and for allowing the annular support and the outer ring to rotate relative to the inner sleeve when the plate is in the partially raised position.

Abutment means are advantageously provided for limiting the angular travel of the annular support on the body when the plate is in the partially raised position.

Further characteristics and advantages of the invention will become clear in the course of the detailed description which follows with reference to the appended drawings provided purely by way of non-limiting example, in which:
Figure 1 is a schematic side elevational view of a plug for electrical connectors according to the invention,
Figure 2 is a longitudinal section taken on the line II-II of Figure 1, on an enlarged scale,
Figure 3 is an exploded view of Figure 2,
Figure 4 is a cross-section taken on the line IV-IV of Figure 2,
Figure 5 is a view similar to Figure 1 with the support plate for the socket cover shown in the partially raised position,
Figure 6 is a longitudinal section taken on the line VI-VI of Figure 5, on an enlarged scale,
Figure 7 is a front elevational view taken on the arrow VII-VII of Figure 3,
Figure 8 is a cross-section taken on the line VIII-VIII of Figure 7,
Figure 9 is a cross-section taken on the line IX-IX of Figure 2, and
Figure 10 is a cross-section taken on the line X-X of Figure 2.

In the drawings, a plug, normally with 13 poles, for electrical connectors for connection between a towing vehicle and a trailer, is generally indicated 1. The plug 1 is intended to be coupled with a complementary socket of known type, not shown in the drawings: for the purposes of the present invention, it is sufficient to explain that the socket comprises a hollow body containing an electrical contact assembly and having means for engagement with the plug 1 by means of a bayonet connection, as well as a front spring-closure cover which can be raised to enable the plug 1 to be inserted.

The plug 1 is formed by a hollow body 2 of moulded plastics material including, essentially, three parts: an inner sleeve 3, a tubular rear end portion 4 and an outer ring 5.

According to a first aspect of the invention, the inner sleeve 3 and the tubular rear end portion 4 are formed as a single piece and an electrical contact assembly 6 is housed therein.

The contact assembly 6 comprises, in a generally conventional manner, a contact-holder element 7 from which male contact members 8 project axially for coupling with corresponding female contact members of the socket, the male contact members 8 being connected to respective electrical conductors 9 which emerge from the body 2 through the tubular rear end portion 4, and are gathered together in a cable 10. An axial arm 11 is fixed to the contact-holder element 7 and its free end forms a first cable-grip portion 12 for clamping the cable 10.

According to another aspect of the invention, a second cable-grip portion 13, constituted by an integral internal projection of the body 2, has the function of clamping the contact assembly 6 rigidly relative to the plug 1 by means of a pair of screws 14 which are inserted from the outside through respective holes 15 in the body 2 and are screwed into corresponding holes 16 in the first, contact-assembly portion 12.

In order for the contact assembly 6 to be fitted correctly in the body 2, the body 2 is formed with an internal, axial, angular location element 17, and with a frontal stop 18 for locating the contact-holder 7 axially, as well as a frontal stop 19 for locating the first, contact-assembly portion 12 axially.

In order to fit the contact assembly 6 it is necessary simply to position it in front of the plug 1, to insert the cable 10 through the body 2 and connect the conductors 9 to the respective contact members 8 in the contact-holder 7, and then to retract the cable 10 so as to insert the contact assembly 6, which is oriented in the correct angular position by means of the locating element 17, in the body 2. After abutment has taken place between the contact-holder element 7 and the stop 18, on the one hand, and between the first, contact-assembly portion 12 and the stop 19, on the other hand, the two screws 14 inserted through the holes 15 are screwed fully into the respective holes 16 so as to clamp the portion 12 against the projection 13 and consequently to fix the contact assembly 6 rigidly within the body 2.

To ensure that the rear end portion of the plug 1 seals the contact assembly 6 in a fluid-tight manner, a cable-guide sleeve 21 with a polygonal external surface is engaged on the tubular rear end portion 4 by means of a threaded coupling 20, a sealing ring 22 of elastomeric material or the like, through which the cable 10 in turn extends, being clamped axially therein.

The body 2 is formed externally with a first, front portion 23 of smaller diameter, adjoining an intermediate, larger-diameter portion 24 which in turn has a circumferential groove 25 and an annular stop projection 26 in the portion connected to the tubular rear end portion 4.

The outer ring 5 is mounted coaxially and rotatably on the inner sleeve 3 and is locked axially relative thereto. The outer ring 5 has a front, smaller-diameter portion 27 which is engaged on the front portion 23 of the inner sleeve 2 and adjoins an intermediate, larger-diameter portion 28 which is engaged on the intermediate portion 24 of the inner sleeve 2, and adjoins a rear portion 29 which is divided by axial notches 30 into radially resilient sectors 31 with respective radial teeth 32 at their ends.

Helical grooves 33 formed on the front portion 27 serve, in known manner, for the bayonet coupling with the socket.

During assembly, the outer ring 5 is fitted on the body 2 by the sliding of the radial teeth 32, which are spread apart radially by virtue of the resilient deformation of the respective sectors 31, until the teeth 32 snap-engage in the annular groove 25 of the inner sleeve 3.

A disc, indicated 34, also of moulded plastics material, is carried outside the body 2 and over the intermediate portion 28 of the outer ring 5, its function being to support the spring cover of the socket when the plug 1 is inserted therein.

According to a further aspect of the invention, the support plate 34 is independent both of the inner sleeve 3 and of the outer ring 5 and can be rotated relative to both of these elements. For this purpose, the plate 34 is fixed on an annular support 35 which is mounted on the intermediate portion 24 of the inner sleeve 3, between the rear portion 29 of the outer ring 5 and the annular stop projection 26.

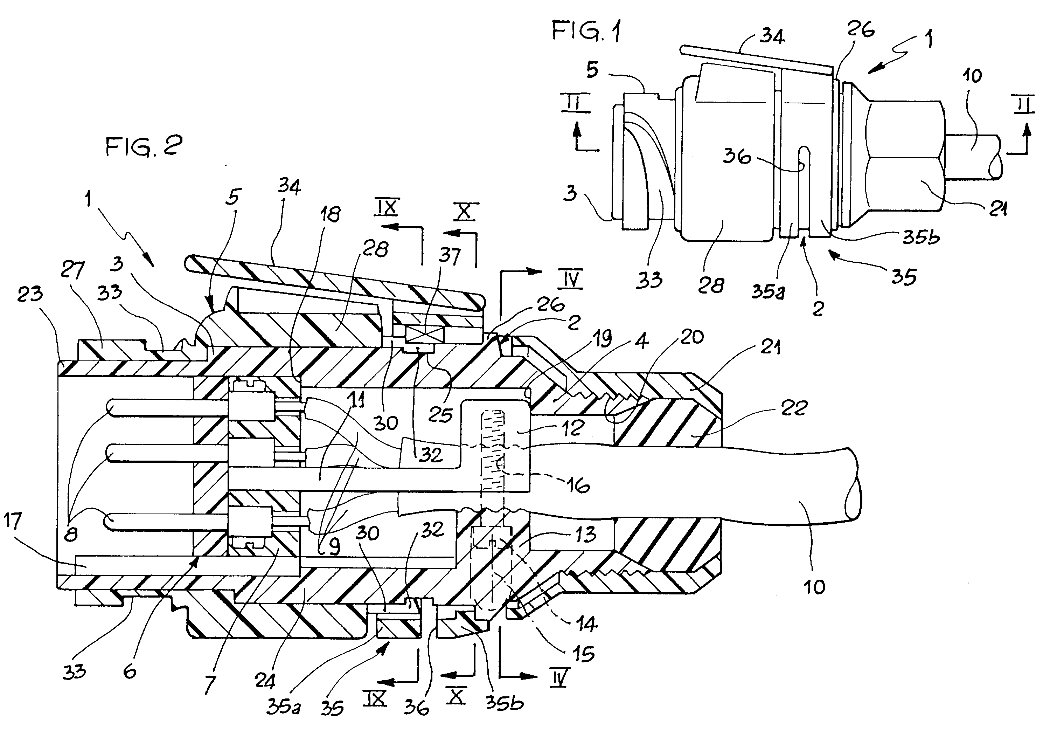

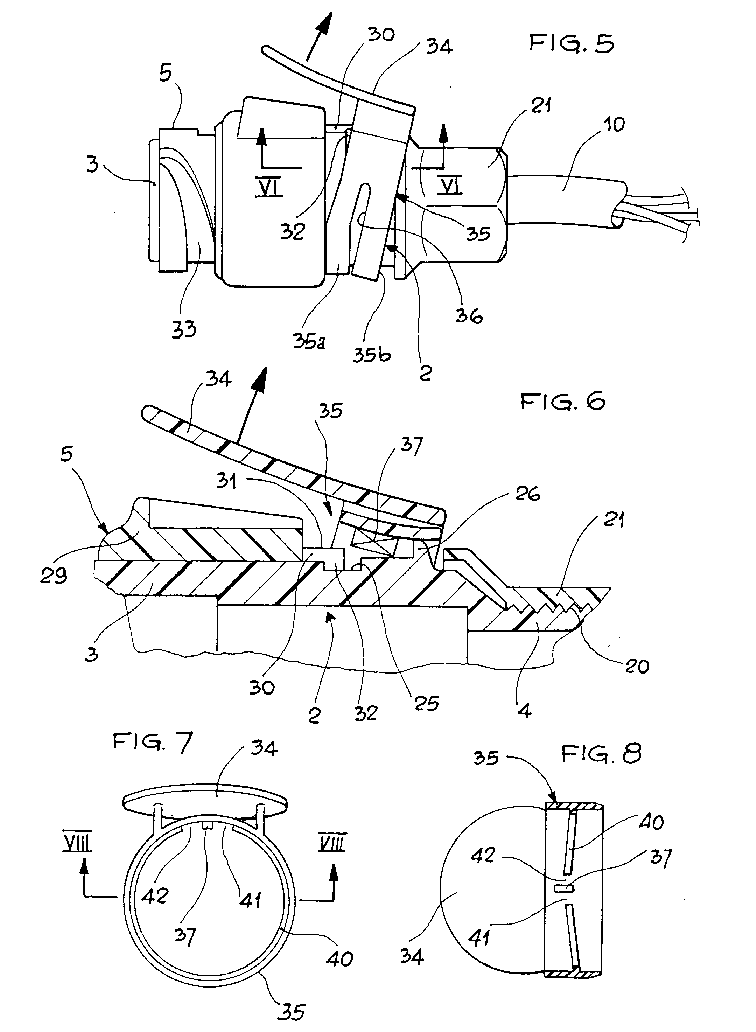

The annular support 35 is divided by a slot 36, disposed on the side opposite the plate 34 and extending through an angle of the order of 180°, into two portions 35a, 35b which can be brought resiliently towards each other to enable the plate 34 to move angularly from a lowered position shown in Figures 1 and 2 towards a partially raised position, shown in Figures 5 and 6. In the partially raised position, the portion 35a bears frontally against the intermediate portion 28 of the outer ring 5 and is deformed resiliently, by virtue of the presence of the slot 36, so that the portion 35b is brought alongside it axially.

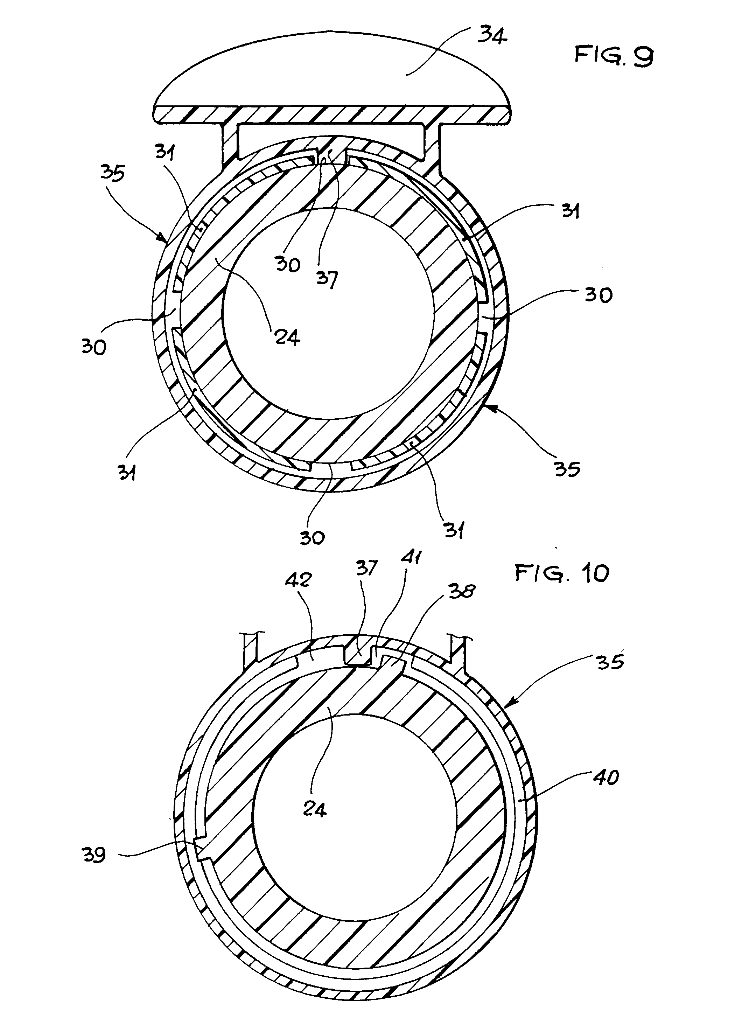

Beneath the plate 34, the annular support 35 has a radial tooth 37 which, when the plate 34 is in the lowered position, engages in the corresponding axial notch 30 in the outer ring 5 in the manner which can be seen in Figures 2 and 9. Moreover, the tooth 37 cooperates with a pair of radial stop projections 38, 39 which are spaced apart angularly by about 90° on the intermediate portion 24 of the inner sleeve 3, as can be seen in Figure 10.

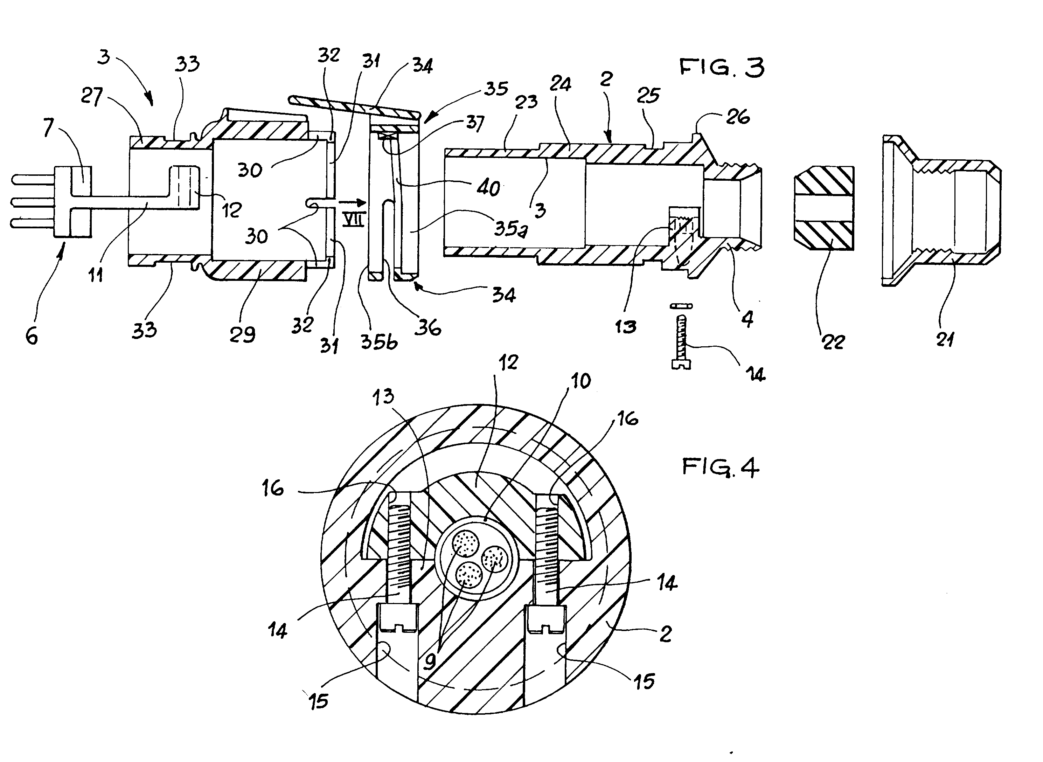

A rib 40 formed on the internal wall of the annular support 35 has breaks on opposite sides of the stop tooth 37, defining two seats 41 and 42. As can best be seen in Figure 3, starting from these seats 41 and 42, the rib 40 is inclined towards the rear portion of the annular support 35 and, on the side opposite the plate 34 extends only along the portion 35a.

When the plate 34 is in the lowered position, the two seats 41 and 42 can be engaged, respectively, by the projection 38 and by the projection 39, when the plate 34 is in the angular position shown in Figures 1 and 2, and when it is in an angular position to which it is rotated through 90^{o} (anticlockwise with reference to Figure 10) from the angular position of Figures 1 and 2, respectively.

In the condition of Figures 1 and 2, the support plate 34 and the outer ring 5 are prevented from rotating, on the one hand, by their mutual engagement (the stop tooth 37 engaged in the notch 30) and, on the other hand, by the locking of the plate 34 against rotation relative to the body 2 (the projection 38 engaged in the seat 41).

A condition which is necessary and sufficient to allow the outer ring 5 and the plate 34 to rotate both relative to the body 2 and relative to each other, is that the plate 34 be moved to the partially raised position of Figures 5 and 6. In this case, in fact, the tooth 37 is disengaged from the notch 30 (which releases the outer ring 5 for rotation) and the seat 41 is released from the projection 38 (which releases the annular support 35 for rotation).

A condition which is necessary and sufficient for the outer ring 5 and the plate 34 to be locked relative to the body 2 is that the plate 34 be lowered and the annular support 35 be disposed in one or other of the two angular positions 90^{o} apart in which the tooth 37 engages the corresponding notch 30 and the projection 38 engages the seat 41 (which corresponds to the connected condition of the bayonet coupling between the plug 1 and the socket), or the projection 39 engages the seat 42 (which corresponds to the disconnected condition of the bayonet coupling between the plug 1 and the socket).

Naturally, the plate 34 can rotate relative to the body 2 with an angular travel of 90^{o} defined by the projections 38 and 39. The outer ring 5 can naturally only rotate if the plate 34 is kept raised, without any limit to its angular travel both relative to the plate 34 and relative to the body 2.

The plug 1 is fitted in the socket in the following manner.

The three main components of the plug (the body 2, the outer ring 5 and the support plate 34) are normally locked against relative rotation and are positioned as in Figures 1 and 2 with the projection 39 engaged in the seat 42 so that the plug 1 can be inserted axially in the socket.

In order to be able to rotate the outer ring 5 relative to the body 2 it is necessary, as stated above, to raise the plate 34 to the position of Figures 5 and 6: this action can be achieved simply by gripping the plug 1 and placing one's thumb under the plate 34.

The engagement of the plug 1 in the socket is achieved by the rotation of the outer ring 5 so as to engage the bayonet coupling. At this stage it is possible (but not essential) also to rotate the plate 34: in practice, this normally occurs.

After the bayonet engagement has been achieved, it suffices to release the plate 34, possibly after repositioning it angularly in the position of Figures 1 and 2: as a result of its lowering, engagement takes place between the tooth 37 and the corresponding notch 30, on the one hand, and between the projection 38 and the seat 41, on the other hand. The outer ring 5 and the plate 34 are thus kept locked against rotation relative to the body 2.

In order to remove the plug 1 from the socket, it is necessary first to raise the plate 34 so as to release the outer ring 5 for rotation and then to disengage the bayonet coupling. At this stage the plate 34 will normally be rotated together with the outer ring 5: the rotation of the plate 34, however, is limited by the projection 39 to a maximum of 30° relative to the body 2 and, if the plate 34 is released during the rotation, the rotation of the outer ring 5 will also be limited correspondingly.

Upon completion of the rotation, the plug 1 can be removed from the socket axially.

In practice, therefore, the outer ring 5 and the plate 34 can be locked relative to the body 2 automatically in only two angular postions for insertion and for engagement in the socket, respectively. The locking is rigid and firm both when the plug 1 is not fitted in the socket and when it is inserted axially in the socket but its cover is not bearing on the plate 34.

## Claims

1. A plug (1) for electrical connectors for connection between a towing vehicle and a trailer, comprising a hollow body (2) which can be coupled with the socket by means of a bayonet engagement, and including an inner sleeve (3) containing a contact assembly (6) with an associated cable-grip (12, 13), a tubular rear end portion (4) coaxial with an end of the inner sleeve (3), an outer ring (5) rotatable coaxially on the inner sleeve (3) and having bayonet engagement means (33), and a plate (34) carried by the body (2) for supporting a closure cover of the socket, characterized in that the inner sleeve (3) and the tubular rear end portion (4) are formed as a single piece, in that the contact assembly (6) is clamped rigidly relative to the inner sleeve (3) by means of the cable-grip (12, 13), and in that the support plate (34) is independent both of the inner sleeve (3) with the tubular rear end portion (4), and of the outer ring (5) and can be rotated relative to both of these elements.

2. A plug according to Claim 1, characterized in that the contact assembly (6) is fixed to an integral internal projection (13) of the inner sleeve (2) which defines a portion of the cable grip (12, 13).

3. A plug according to Claim 2, characterized in that the body (2) has an internal, integral stop and axial-locating portion (18) which the rear of the contact assembly (6) abuts, and in that the cable-grip comprises a transverse clamping plate (12) which is fixed by means of screws (14) to the integral projection (13) of the inner sleeve (3).

4. A plug according to Claim 1, characterized in that an annular support (35) mounted coaxially on the inner sleeve (3) is fixed to the support plate (34) and has at least one resiliently deformable portion (35a, 35b) for enabling the plate (34) to pivot between a lowered position and a partially raised position relative to the body (2) and to the outer ring (5), stop means (37, 30; 38, 39; 41, 42) being provided for locking the annular support (35) against rotation relative to the outer ring (5) and relative to the inner sleeve (3) when the support plate (34) is in the lowered position, and for allowing the annular support (35) and the outer ring (5) to rotate relative to the internal sleeve (3) when the support plate (34) is in the partially raised position.

5. A plug according to Claim 4, characterized in that it comprises abutment means (38, 39) carried by the inner sleeve (3) for limiting the angular travel of the annular support (35) when the plate (34) is in the partially raised position.

6. A plug according to Claim 4, characterized in that the stop means comprise at least one axial stop recess (30) formed in the outer ring (5) and a complementary stop tooth (37) carried by the annular support (35) in angular correspondence with the support plate (34).

7. A plug according to Claims 5 and 6, characterized in that the abutment means comprise a pair of angularly-spaced radial projections (38, 39) on the outside of the inner sleeve (3) for engaging a pair of respective seats (41, 42) in the annular support (35), on opposite sides of the stop tooth (37).

8. A plug according to claim 4, characterized in that the annular support (35) is divided, in the region opposite the support plate (34), into two separate sector-like portions (35a, 35b) which can be moved resiliently towards each other and apart axially as a result of the movement of the support plate (34) between the raised and lowered positions.

## Patentansprüche

1. Stecker (1) für elektrische Verbinder zur Herstellung einer Verbindung zwischen einem Zugfahrzeug und einem Anhänger, mit einem hohlen Körper (2), der mit dem aufnahmeteil mittels einer Bajonettverbindung gekoppelt werden kann, und mit einer inneren Hülse (3), die eine Kontaktanordnung (6) mit einer zugeordneten Kabelgreifeinrichtung (12, 13) enthält, mit einem rohrförmigen hinteren Endbereich (4), der koaxial zu einem Ende der inneren Hülse (3) angeordnet ist, mit einem äußeren Ring (5), der koaxial auf der inneren Hülse (3) drehbar ist und eine BajonettverbindungsEingriffseinrichtung (33) aufweist, und mit einer von dem Körper (2) getragenen Platte (34) zum Haltern einer Verschlußabdeckung des Aufnahmeteils,
dadurch gekennzeichnet, daß die innere Hülse (3) und der rohrförmige hintere Endbereich (4) einstückig ausgebildet sind, daß die Kontaktanordnung (6) mittels der Kabelgreifeinrichtung (12, 13) relativ zu der inneren Hülse (3) starr festgeklemmt ist, und daß die Halterungsplatte (34) sowohl von der inneren Hülse (3) mit dem rohrförmigen hinteren Endbereich (14) als auch von dem äußeren Ring (5) unabhängig ausgebildet ist und relativ zu beiden dieser Elemente verdrehbar ist.

2. Stecker nach Anspruch 1,
dadurch gekennzeichnet, daß die Kontaktanordnung (6) an einem integralen inneren Vorsprung (13) der inneren Hülse (2) festgelegt ist, der einen Bereich der Kabelgreifeinrichtung (12, 13) definiert.

3. Stecker nach Anspruch 2,
dadurch gekennzeichnet, daß der Körper (2) einen inneren, integralen Anschlag sowie einen axialen Festlegebereich (18) aufweist, an dem das hintere Ende der Kontaktanordnung (6) anliegt, und daß die Kabelgreifeinrichtung eine querverlaufende Klemmplatte (12) aufweist, die mittels Schrauben (14) an dem integralen Vorsprung (13) der inneren Hülse (3) befestigt ist.

4. Stecker nach Anspruch 1,
dadurch gekennzeichnet, daß ein ringförmiger Träger (35), der koaxial auf der inneren Hülse (3) angebracht ist, an der Halterungsplatte (34) befestigt ist und wenigstens einen nachgiebig verformbaren Bereich (35a, 35b) aufweist, um der Platte (34) eine Schwenkbewegung zwischen einer abgesenkten Position und einer teilweise angehobenen Position relativ zu dem Körper (2) und zu dem äußeren Ring (5) zu ermöglichen, wobei eine Anschlageinrichtung (37, 30; 38, 39; 41, 42) vorgesehen ist, um den ringförmigen Träger (35) gegen eine Rotationsbewegung relativ zu dem äußeren Ring (5) und relativ zu der inneren Hülse (3) zu verriegeln, wenn sich die Halterungsplatte (34) in der abgesenkten Position befindet, und um dem ringförmigen Träger (35) und dem äußeren Ring (5) eine Rotationsbewegung relativ zu der inneren Hülse (3) zu ermöglichen, wenn sich die Halterungsplatte (34) in der teilweise angehobenen Position befindet.

5. Stecker nach Anspruch 4,
dadurch gekennzeichnet, daß er eine von der inneren Hülse (3) getragene Anstoßeinricntung (38, 39) aufweist, um die winkelmäßige Bewegung des ring-förmigen Trägers (35) zu begrenzen, wenn sich die Platte (34) in der teilweise angehobenen Position befindet.

6. Stecker nach Anspruch 4,
dadurch gekennzeichnet, daß die Anschlageinrichtung wenigstens eine axiale Anschlagvertiefung (30), die in dem äußeren Ring (5) gebildet ist, sowie einen komplementären Anschlagzahn (37) aufweist, der von dem ringförmigen Träger (35) in winkelmäßiger Entsprechung zu der Trägerplatte (34) getragen ist.

7. Stecker nach Anspruch 5 und 6,
dadurch gekennzeichnet, daß die Anstoßeinricntung ein Paar winkelmäßig voneinander beabstandeter, radialer Vorsprünge (38, 39) auf der Außenseite der inneren Hülse (3) zum Eingreifen in ein Paar jeweiliger Sitze (41, 42) in dem ringförmigen Träger (35) auf gegenüberliegenden Seiten des Anschlagzahns (37) aufweist.

8. Stecker nach Anspruch 4,
dadurch gekennzeichnet, daß der ringförmige Träger (35) in dem der Halterungsplatte (34) gegenüberliegenden Bereich in zwei separate, secktorartige Bereiche (35a, 35b) unterteilt ist, die als Ergebnis der Bewegung der Halterungsplatte (34) zwischen der angehobenen und der abgesenkten Position in elastischer Weise axial aufeinander zu und voneinander weg bewegt werden können.

## Revendications

1. Fiche (1) pour connecteurs électriques assurant le raccordement entre un véhicule tracteur et une remorque, comprenant un corps creux (2) qui peut être accouplé à la douille par un raccord à baïonnette, et comprenant un manchon interne (3) contenant un ensemble de contacts (6) avec un organe associé de serrage de câble (12, 13), une partie d'extrémité arrière tubulaire (4) coaxiale à une extrémité du manchon interne (3), une bague externe (5) qui peut tourner coaxialement sur le manchon interne (3) et ayant un dispositif (33) de raccord à baïonnette, et une plaque (34) portée par le corps (2) pour le support d'un couvercle de fermeture de la douille, caractérisée en ce que le manchon interne (3) et la partie d'extrémité arrière tubulaire (4) sont formés en une seule pièce, en ce que l'ensemble de contacts (6) est serré rigidement par rapport au manchon interne (3) par l'organe de serrage de câble (12, 13), et en ce que la plaque de support (34) est indépendante à la fois du manchon interne (3) et de la partie d'extrémité arrière tubulaire (4), et de la bague externe (5) et peut tourner par rapport à ces éléments.

2. Fiche selon la revendication 1, caractérisée en ce que l'ensemble de contacts (6) est fixé à une saillie interne solidaire (13) du manchon interne (2) qui délimite une partie de l'organe de serrage de câble (12, 13).

3. Fiche selon la revendication 2, caractérisée en ce que le corps (2) comporte une partie (18) de positionnement axial et d'arrêt interne solidaire contre laquelle est en butée l'arrière de l'ensemble de contacts (6), et en ce que l'organe de serrage de câble comprend une plaque transversale de serrage (12) qui est fixée par des vis (14) à la saillie solidaire (13) du manchon interne (3).

4. Fiche selon la revendication 1, caractérisée en ce qu'un support annulaire (35) monté coaxialement sur le manchon interne (3) est fixé à la plaque de support (34) et a au moins une partie élastiquement déformable (35a, 35b) destinée à permettre le pivotement de la plaque (34) entre une position abaissée et une position partiellement levée par rapport au corps (2) et à la bague externe (5), un dispositif d'arrêt (37, 30 ; 38, 39 ; 41, 42) étant destiné à bloquer le support annulaire (35) afin qu'il ne puisse pas tourner par rapport à la bague externe (5) et au manchon interne (3) lorsque la plaque de support (34) est dans sa position abaissée, et à permettre la rotation du support annulaire (35) et de la bague externe (5) par rapport au manchon interne (3) lorsque la plaque de support (34) est dans sa position partiellement levée.

5. Fiche selon la revendication 4, caractérisée en ce qu'elle comprend un dispositif de butée (38, 39) supporté par le manchon interne (3) et destiné à limiter la course angulaire du support annulaire (35) lorsque la plaque (34) est dans sa position partiellement levée.

6. Fiche selon la revendication 4, caractérisée en ce que le dispositif d'arrêt comporte au moins une cavité d'arrêt axial (30) formée dans la bague externe (5) et une dent complémentaire d'arrêt (37) portée par le support annulaire (35) et correspondant angulairement à la plaque de support (34).

7. Fiche selon les revendications 5 et 6, caractérisée en ce que le dispositif de butée comprend une paire de saillies radiales (38, 39) espacées angulairement et placées à l'extérieur du manchon interne (3) afin qu'elles coopèrent avec une paire de sièges respectifs (41, 42) formés dans le support annulaire (35), sur les côtés opposés de la dent d'arrêt (37).

8. Fiche selon la revendication 4, caractérisée en ce que le support annulaire (35) est divisé, dans la région opposée à la plaque de support (34) en deux parties séparées (35a, 35b) en forme de secteur qui peuvent être déplacées élastiquement l'une vers l'autre et l'une à distance de l'autre axialement à la suite du déplacement de la plaque de support (34) entre les positions levée et baissée.
